# FASCICULE DE BREVET EUROPEEN

(11) **EP 4 156 131 B1**
(45) Date de publication et mention de la délivrance du brevet: **03.09.2025**
(21) Numéro de dépôt: 22197201.1
(22) Date de dépôt: 22.09.2022
(51) Int. Cl.: G07C 9/00, G07C 9/20, G06Q 10/10, G06Q 50/163, G06Q 30/02, G07C 13/00

(54) **ENSEMBLE COMPORTANT UN PANNEAU ÉLECTRONIQUE D'AFFICHAGE**
ANORDNUNG MIT EINER ELEKTRONISCHEN ANZEIGETAFEL
ASSEMBLY COMPRISING AN ELECTRONIC DISPLAY PANEL

(30) Priorité: 27.09.2021 FR 2110179
(43) Date de publication de la demande: 29.03.2023
(73) Titulaire: Cogelec, 85290 Mortagne-sur-Sèvre (FR)
(72) Inventeur: LECLERC, Roger, 85290 MORTAGNE-SUR-SÈVRE (FR); SCHIRM, Sébastien, 85290 MORTAGNE-SUR-SÈVRE (FR)
(74) Mandataire: INNOV-GROUP

(56) Documents cités:
- EP-A2- 2 355 050
- US-A1- 2011 251 876
- US-B2- 9 449 444

## Description

L'invention concerne un ensemble comportant un panneau électronique d'affichage.

Depuis longtemps, des panneaux d'affichage sont installés dans les parties communes de bâtiments, tels que des immeubles. Ces panneaux d'affichages sont utilisés pour afficher des notes ou des courriers destinés à être lus par les résidents du bâtiment. Actuellement, pour cela, ces notes et courriers sont imprimés par l'administrateur du bâtiment puis épinglés sur le panneau d'affichage.

La gestion de ces notes et courriers papiers est fastidieuse. A cause de cela, il est souhaitable de remplacer ces panneaux d'affichage par des panneaux électroniques d'affichage qui remplissent la même fonction.

Le déposant a aussi proposé d'utiliser ces panneaux électroniques d'affichage pour réaliser des fonctions supplémentaires comme, par exemple, des sondages. Dans ce dernier cas, le panneau électronique d'affichage affiche une question et enregistre les réponses de chaque utilisateur à cette question. Au moins pour certains de ces sondages, il faut que chaque réponse soit associée à un identifiant de l'utilisateur qui a répondu. Pour qu'une telle fonction supplémentaire puisse être mise en œuvre, il faut donc aussi prévoir un mécanisme d'identification des utilisateurs. Ce mécanisme d'identification doit être simple à mettre en œuvre et simple à réaliser pour être peu coûteux.

De l'état de la technique est connu de :
- EP2355050A2,
- US9449444B2, et
- US2011/251876A1.

Pour atteindre cet objectif, l'invention a pour objet un ensemble conforme à la revendication 1.

Les modes de réalisation de cet ensemble peuvent comporter une ou plusieurs des caractéristiques des revendications dépendantes.

L'invention sera mieux comprise à la lecture de la description qui va suivre, donnée uniquement à titre d'exemple non limitatif et faite en se référant aux dessins sur lesquels :
- la figure 1 est une illustration schématique d'un ensemble comportant un panneau d'affichage et un système de contrôle d'accès à un bâtiment ;
- la figure 2 est une illustration schématique de l'architecture d'une centrale d'accès utilisée dans l'ensemble de la figure 1 ;
- la figure 3 est une illustration schématique de l'architecture d'un panneau d'affichage de l'ensemble de la figure 1 ;
- la figure 4 est un organigramme d'un procédé de fonctionnement de l'ensemble de la figure 1.

Dans la suite de cette description, les caractéristiques et fonctions bien connues de l'homme du métier ne sont pas décrites en détails.

Dans cette description, des exemples détaillés de modes de réalisation sont d'abord décrits dans un chapitre I en référence aux figures. Ensuite, dans un chapitre II, des variantes de ces modes de réalisation sont présentées. Enfin, les avantages des différents modes de réalisation sont présentés dans un chapitre III.

### Chapitre I : Exemples de modes de réalisation

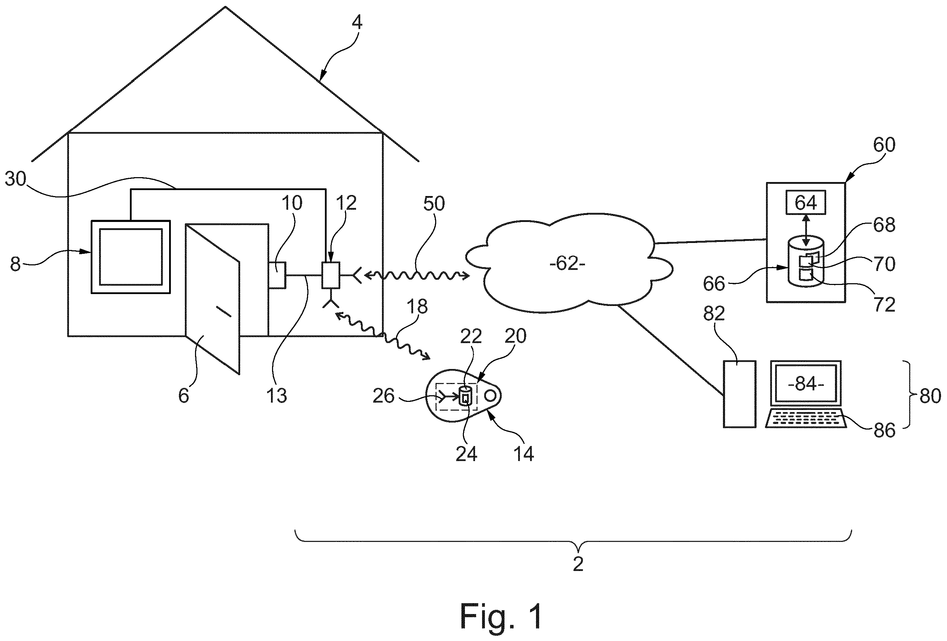

La figure 1 représente un ensemble comportant :
- un système 2 de contrôle d'accès à un bâtiment 4 équipé d'une porte 6 d'accès, et
- un panneau électronique 8 d'affichage.

Le bâtiment 4 est divisé en plusieurs appartements privés appartenant chacun à des résidents respectifs.

La porte 6 est déplaçable entre une position ouverte et une position fermée. Dans la position fermée, elle interdit l'accès à l'intérieur du bâtiment 4. Dans la position ouverte, un visiteur ou un résident peut librement entrer à l'intérieur du bâtiment 4. La porte 6 débouche dans des parties communes du bâtiment 4.

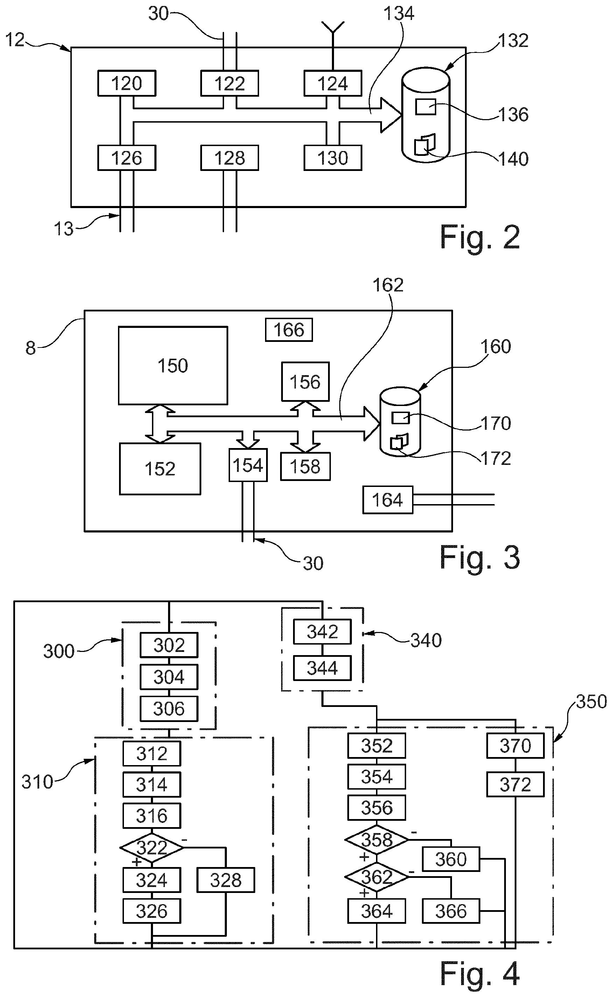

Le panneau 8 est installé dans ces parties communes. Par exemple, le panneau 8 est fixé sur un mur des parties communes. Ce panneau 8 permet d'afficher des informations à destination des résidents du bâtiment 8. De plus, le panneau 8 est interactif dans le sens où il peut interagir avec des utilisateurs pour remplir des fonctions supplémentaires par rapport à un simple affichage passif d'informations. Les utilisateurs du panneau 8 sont typiquement les résidents du bâtiment 4 mais ils peuvent aussi être des visiteurs, des prestataires de services ou autres. Ici, le panneau 8 permet de sonder les résidents en affichant une question et en enregistrant leur réponse. Ce panneau 8 est décrit plus en détail en référence à la figure 3.

Pour contrôler les accès au bâtiment 4, le système 2 comporte :
- une serrure électrique 10,
- une centrale 12 d'accès raccordée à la serrure 10, et
- des clés électroniques.

Typiquement, le système 2 peut comporter plusieurs centrales d'accès pour contrôler les accès à plusieurs bâtiments ou à différentes parties d'un même bâtiment. Les différentes serrures électriques et centrales d'accès fonctionnent alors, respectivement, comme la serrure 10 et la centrale 12. Ainsi, par la suite, ces autres serrures électriques et autres centrales d'accès ne sont pas décrites en détails et n'ont pas été représentées.

La serrure 10 se déplace entre une position verrouillée et une position déverrouillée. Dans la position verrouillée, elle maintient la porte 6 dans sa position fermée. Dans la position déverrouillée, la porte 6 peut librement être déplacée de sa position fermée vers sa position ouverte. La serrure 10 se déplace de sa position verrouillée vers sa position déverrouillée en réponse à la réception d'une commande d'ouverture. Ensuite, une fois cette commande d'ouverture reçue, elle reste dans la position déverrouillée pendant une durée prédéterminée, puis retourne automatiquement dans sa position verrouillée à l'issue de cette durée prédéterminée.

La serrure 10 est directement raccordée à la centrale 12 par l'intermédiaire d'une liaison filaire 13. La commande d'ouverture est transmise à la serrure 10 par intermédiaire de cette liaison 13.

Pour simplifier la figure 1, seule une clé électronique 14 a été représentée.

La clé 14 est une clé à transpondeur également connue sous le terme de "étiquette RFID" ou "radio étiquette" ou les termes anglais de «RFID tag» et « RFID transponder ». L'acronyme RFID correspond à "Radio Frequency IDentification".

La clé 14 est dépourvue de sa propre source d'alimentation. La clé 14 est alimentée par la centrale 12 par l'intermédiaire d'une liaison 18 courte distance sans fil de transmission d'informations. Dans ce texte, par « liaison courte distance », on désigne une liaison qui peut uniquement s'établir sur une distance inférieure à 10 m ou 5 m. Au-delà de cette distance, la liaison courte distance ne peut pas s'établir et n'existe pas.

Typiquement, la clé 14 comporte un transpondeur 20 équipé :
- d'une mémoire 22 non volatile contenant un identifiant 24 de la clé, et
- une antenne 26 apte à transmettre l'identifiant 24 à la centrale 12 dès que la liaison 18 est établie.

L'identifiant 24 permet d'identifier de façon unique la clé 14 parmi l'ensemble des clés du système 2.

L'antenne 26 sert également à extraire l'énergie nécessaire au fonctionnement du transpondeur 20 à partir des signaux électromagnétiques rayonnés par la centrale 12.

Ici, la clé 14 est donc une clé électronique passive et ne comporte pas d'autres éléments électroniques que ceux décrits ci-dessus.

Dans le cas de l'utilisation d'un transpondeur tel que le transpondeur 20, la liaison 18 s'établit sur une distance maximale inférieure à 50 cm ou 10 cm ou 2 cm. La fréquence de l'onde électromagnétique utilisée pour établir la liaison 18 est ici égale à 13,56 MHz. Toutefois, d'autres fréquences sont possibles.

La centrale 12 est apte à transmettre la commande d'ouverture à la serrure 10 uniquement lorsque la clé est autorisée à ouvrir la porte 6. Dans le cas où la clé n'est pas valide, c'est-à-dire qu'elle n'est pas autorisée à déverrouiller la serrure 10, aucune commande d'ouverture n'est transmise à la serrure 10 et celle-ci reste donc dans sa position verrouillée.

Une clé est valide lorsque son identifiant de clé est associé à des droits d'accès préenregistrés qui autorisent l'ouverture de la porte 6. Par exemple, ces droits d'accès préenregistrés comportent une liste d'identifiants de clés autorisées à déverrouiller la serrure 10. Si l'identifiant de clé transmis par la clé à la centrale 12 appartient à cette liste, alors la clé est valide. Dans le cas contraire, la clé n'est pas valide.

Dans ce mode de réalisation, les droits d'accès sont enregistrés localement dans une mémoire de la centrale 12. Dans ces conditions, de temps en temps, il est nécessaire de mettre à jour les droits d'accès enregistrés dans la centrale 12. Une telle mise à jour permet, par exemple, d'autoriser une nouvelle clé à déverrouiller la serrure 10 et/ou, au contraire, d'interdire à une clé électronique de déverrouiller la serrure 10. Pour cela, la centrale 12 est apte à établir une liaison 50 longue distance sans fil qui raccorde la centrale 12 à un serveur 60 de droits d'accès.

La liaison 50 s'établit par l'intermédiaire d'un réseau public 62. Le réseau 62 est un réseau à commutation de paquets. Ici, le réseau 62 est un réseau cellulaire. Une liaison longue distance est une liaison d'échange d'informations qui peut s'établir entre des émetteurs et des récepteurs situés à plusieurs kilomètres les uns des autres.

De plus, dans cet exemple de mode de réalisation, la centrale 12 est raccordée au panneau 8 par l'intermédiaire d'une liaison 30. Dans cet exemple, la liaison 30 est une liaison filaire.

Le serveur 60 comporte notamment un microprocesseur 64 et une mémoire 66. Le microprocesseur 64 est apte à exécuter des instructions enregistrées dans la mémoire 66. Ici, la mémoire 66 comporte notamment les instructions d'un module 68 de gestion des droits d'accès et d'un module 70 de configuration des panneaux électroniques d'affichage. La mémoire 66 comporte aussi une base 72 de données qui, à chaque identifiant de clé du système 2, associe notamment des droits d'accès à utiliser pour autoriser et, en alternance, interdire le déverrouillage de chaque serrure du système 2. La base 72 comporte donc en particulier les droits d'accès nécessaires pour autoriser et, en alternance, interdire le déverrouillage de la serrure 10. Dans la base 72, chaque identifiant de clé est également associé à des informations nominatives permettant d'identifier le ou les titulaires de la clé. Ces informations nominatives comportent typiquement un identifiant de l'appartement et, éventuellement, le nom et le prénom du titulaire de la clé, l'adresse du bâtiment dans lequel il réside et, éventuellement, d'autres informations sur le titulaire de la clé. La base 72 comporte également l'ensemble des informations nécessaires à la mise en œuvre d'un sondage à l'aide du panneau 8.

Lorsque les instructions des modules 68, 70 sont exécutées, ces modules interagissent avec un poste 80 d'administration du système 2. Ce poste 80 est ici raccordé au serveur 60 par l'intermédiaire du réseau 62. Ainsi, le poste 80 et le serveur 60 peuvent être éloignés l'un de l'autre.

Le poste 80 est par exemple un ordinateur comportant :
- une unité centrale 82 équipée d'un logiciel, tel qu'un navigateur Internet, qui permet d'interagir avec les modules 68, 70 ;
- un écran 84, et
- un clavier 86.

Le module 68 permet à un administrateur de modifier les droits d'accès contenus dans la base 72 de données. Le module 68 est aussi apte à transmettre, par l'intermédiaire de la liaison 50, une mise à jour des droits d'accès de la centrale 12. En réponse à la réception de cette mise à jour, la centrale 12 met à jour les droits d'accès enregistrés localement. A l'issue de cette mise à jour, les droits d'accès enregistrés localement sont identiques aux droits d'accès enregistrés dans la base 72.

Lorsqu'il est exécuté par le microprocesseur 64, le module 70 permet de définir les informations à afficher par le panneau 8 et de configurer des actions supplémentaires. Par la suite, ce mode de réalisation est décrit dans le cas particulier où l'action supplémentaire est l'organisation d'un sondage ou d'un vote. Le module 70 est aussi apte à transmettre au panneau 8, par l'intermédiaire de la liaison 50, les informations à afficher et la configuration des actions supplémentaires à mettre en œuvre.

La figure 2 représente l'architecture électronique de la centrale 12 dans le cas particulier où celle-ci est dépourvue d'écran, de bouton, de microphone et de haut-parleur. La centrale 12 ne remplit donc pas des fonctions de portier électrique ou d'interphone. La centrale 12 comporte :
- une tête 120 de lecture courte distance apte à établir la liaison 18 pour recevoir l'identifiant de la clé 14,
- une interface filaire 122 pour raccorder la centrale 12 au panneau 8 par l'intermédiaire de la liaison 30,
- un émetteur-récepteur 124 longue distance apte à établir la liaison 50 pour communiquer avec le serveur 60,
- une interface filaire 126 apte à transmettre la commande d'ouverture sur la liaison filaire 13,
- une interface 128 d'alimentation apte à raccorder la centrale 12 à un réseau extérieur d'alimentation électrique,
- un microprocesseur 130 apte à exécuter des instructions enregistrées dans une mémoire,
- une mémoire 132 contenant les instructions et les données nécessaires pour l'exécution du procédé de la figure 4, et
- un bus 134 permettant l'échange d'informations entre les différents composants électroniques de la centrale 12 et le panneau 8.

La mémoire 132 contient notamment les instructions d'un module local 136 de contrôle d'accès. La mémoire 132 contient aussi une base 140 de données contenant les droits d'accès enregistrés localement dans la centrale 12.

Le module 136 est formé par la combinaison du microprocesseur 130 et de la mémoire 132 contenant les instructions de ce module 138 et la base 140 de données. Pour simplifier la figure 2, dans cette figure, la référence 136 pointe seulement sur les instructions de ce module 136 enregistrées dans la mémoire 132.

La tête 120 est un lecteur de transpondeurs. Elle comporte notamment une antenne raccordée à un circuit électronique d'adaptation. La tête 120 est fixée, à l'extérieur, sur une paroi verticale du bâtiment 4. Classiquement, elle est située à proximité de la porte 6, c'est-à-dire, généralement, à moins de 50 m ou à moins de 10 m ou à moins de 3 m de cette porte 6.

L'émetteur-récepteur 124 est ici un émetteur-récepteur, par exemple, conforme à au moins l'une des normes suivantes : la norme LTE-M (« Long-Term Evolution for Machine »), l'une des normes de la troisième génération (3G) tel que la norme UMTS ("Universal Mobile Telecommunications System") et l'une des normes de la quatrième génération (4G) tel que la norme LTE-Advanced ("Long Term Evolution - Advanced").

La figure 3 représente plus en détail l'architecture d'un panneau 8. Le panneau 8 comporte :
- un écran 150,
- une interface homme-machine 152 pour acquérir des instructions transmises par un utilisateur, et
- une interface filaire 154 pour raccorder le panneau 8 à la centrale 12 par l'intermédiaire de la liaison 30,
- une tête 156 de lecture apte à établir une liaison pour recevoir l'identifiant de la clé 14,
- un microprocesseur 158 apte à exécuter des instructions enregistrées dans une mémoire,
- une mémoire 160 contenant les données et les instructions nécessaires pour l'exécution du procédé de la figure 4,
- un bus 162 permettant l'échange d'informations entre les différents composants électroniques du panneau 8,
- une interface 164 d'alimentation apte à raccorder le panneau 8 à un réseau extérieur d'alimentation électrique, et
- une fixation 166 qui permet d'accrocher sans aucun degré de liberté le panneau 8 sur un mur des parties communes du bâtiment 4.

L'écran 150 est capable d'afficher à minima des caractères alphanumériques enregistrés dans la mémoire 160. Il s'agit d'un écran d'assez grande dimension, c'est-à-dire dont la diagonale est supérieure à 30 cm ou 50 cm.

L'interface homme-machine 152 permet à un utilisateur d'interagir avec le panneau 8. Ici, l'interface homme-machine 152 permet notamment d'acquérir une réponse d'un utilisateur pour chaque question affichée sur l'écran 150. À cet effet, dans ce mode de réalisation, l'interface homme-machine 152 comporte au moins deux touches configurées pour sélectionner une réponse parmi deux ou plusieurs réponses possibles.

La tête 156 est par exemple structurellement identique à la tête 120 de la centrale 12. Elle permet d'acquérir l'identifiant de la clé passée à proximité de cette tête 156.

La mémoire 160 comporte notamment les instructions d'un module 170 de commande du panneau d'affichage. Le module 170 est formé par la combinaison du microprocesseur 158 et de la mémoire 160 contenant les instructions de ce module 170 et la base 172 de données. Pour simplifier la figure 3, dans cette figure, la référence 170 pointe seulement sur les instructions de ce module 170 enregistrées dans la mémoire 160.

Lorsque le module 170 est exécuté par le microprocesseur 158, ce module 170 est apte à afficher sur l'écran 150 une question préenregistrée dans une base 172 de données stockées dans la mémoire 160. Le module 170 est aussi configuré pour collecter la réponse à la question affichée acquise par l'intermédiaire de l'interface homme-machine 152 et l'identifiant de la clé de l'utilisateur acquis par l'intermédiaire de la tête 156. Le module 170 enregistre dans la base 172 la réponse collectée en association avec la question affichée et l'identifiant de clé collecté. Dans ce texte, l'expression « enregistrée une donnée X en association avec une donnée Y » signifie qu'un lien entre les données X et Y est enregistré dans la base 172 en plus des données X et Y elles-mêmes. Ce lien permet de retrouver la donnée X à partir de la donnée Y et vice-versa.

Le fonctionnement de l'ensemble formé par le panneau 8 et le système 2 de contrôle d'accès va maintenant être décrit en référence au procédé de la figure 4.

Les grands principes de fonctionnement du système 2 sont connus. Par exemple, ils sont décrits dans la demande EP2239932A1. Ainsi, par la suite, le fonctionnement du système 2 n'est pas décrit en détail.

Par exemple, le procédé débute par une phase 300 de mise à jour des droits d'accès enregistrés dans la base 140 de la centrale 12.

Plus précisément, lors d'une étape 302, un administrateur se connecte au serveur 60 à l'aide du poste 80 d'administration et déclenche l'exécution du module 68 de gestion des droits d'accès par le microprocesseur 64.

Lors d'une étape 304, le poste 80 acquiert les commandes de l'administrateur et les transmet au module 68 de gestion qui, en réponse, met à jour les droits d'accès enregistrés dans la base 72 en fonction des commandes reçues.

Ensuite, lors d'une étape 306, les droits d'accès de la centrale 12 sont mis à jour en fonction des droits d'accès enregistrés dans la base 72 de données. Pour cela, le serveur 60 se connecte à la centrale 12 et établit la liaison 50. Puis le serveur 60 transmet à la centrale 12 la mise à jour à effectuer. En réponse, la centrale 12 met à jour les droits d'accès enregistrés dans la base 140 en fonction de la mise à jour reçue. Une fois la mise à jour réalisée, les droits d'accès contenus dans la base 140 sont, typiquement, identiques à ceux contenus dans la base 72.

Cette mise à jour est par exemple déclenchée périodiquement ou en réponse à une commande particulière acquise par le poste 80 d'administration.

La phase 300 de mise à jour se termine alors et une phase 310 de contrôle d'accès débute.

Lors d'une étape 312, la liaison 18 courte distance entre la clé 14 et la centrale 12 est établie. Cette liaison s'établit automatiquement dès que la clé 14 est suffisamment proche de la tête 120.

Ensuite, lors d'une étape 314, la clé 14 transmet, notamment, son identifiant 24 à la centrale 12 par l'intermédiaire de la liaison 18 et de la tête 120 de lecture.

Lors d'une étape 316, en réponse, l'identifiant 24 est transmis au module 136 de contrôle d'accès.

Lors d'une étape 322, en réponse à la réception de l'identifiant 24 et des autres informations transmises par la clé 14 et à l'aide les droits d'accès préenregistrés dans la base 140, le module 136 détermine si la clé 14 est valide.

Si la clé 14 est valide alors, lors d'une étape 324, le module 136 génère la commande d'ouverture et la transmet à la serrure 10 par l'intermédiaire de la liaison filaire 13.

Lors d'une étape 326, en réponse à la réception de la commande d'ouverture, la serrure 10 se déplace vers sa position déverrouillée et l'utilisateur peut alors ouvrir la porte 6.

Si la clé 14 n'est pas valide alors, lors d'une étape 328, le module 136 ne génère pas la commande d'ouverture. Dans ce cas, aucune commande d'ouverture n'est générée et la serrure 10 reste dans sa position verrouillée.

En complément de la phase 300, l'administrateur procède à une phase 340 de configuration d'un sondage.

Pour cela, lors d'une étape 342, l'administrateur se connecte au serveur 60 à l'aide du poste 80 d'administration et déclenche l'exécution du module 70 de configuration du panneau 8.

Lors d'une étape 344, le poste 80 acquiert l'ensemble des données de configuration nécessaires pour la mise en œuvre d'un sondage et les transmet au module 70 qui, en réponse, les enregistre dans la base 72. Ces données de configuration comportent notamment :
- la question, sous la forme d'un message à afficher, et
- les réponses possibles à cette question.

De plus, les données de configuration peuvent comporter des paramètres supplémentaires tels que :
- la date à laquelle débute le sondage,
- la date à laquelle se termine le sondage,
- des conditions de participation permettant de restreindre l'accès au sondage à un jeu prédéterminé d'identifiants de clés,
- le nombre maximum de réponses associées à un même identifiant de clé,
- le nombre maximum de réponses susceptibles d'être enregistrées.

Ensuite, lors de l'étape 344, le serveur 60 transmet les données de configuration au module 170 du panneau 8. Le module 170 enregistre ces données de configuration reçues dans la base 172. Pour cela, le serveur 60 se connecte à la centrale 12 et établit la liaison 50. Puis, le serveur 60 transmet les données de configuration à la centrale 12 qui les retransmet à son tour au module 170 par l'intermédiaire de la liaison 30. Cette transmission des données de configuration vers le panneau 8 est par exemple déclenchée en réponse à une commande de transmission acquise par le poste de 8.

La phase 340 de configuration est alors terminée et une phase 350 de mise en œuvre du sondage est alors exécutée par le module 170.

Lors d'une étape 352, le module 170 déclenche l'affichage de la question enregistrée dans la base 172 sur l'écran 150.

Lors d'une étape 354, l'interface homme-machine 152 acquiert la réponse sélectionnée par un utilisateur à cette question. Par exemple, l'utilisateur présent devant l'écran sélectionne sa réponse à l'aide des touches de l'interface homme-machine 152.

Ensuite, lors d'une étape 356, pour identifier l'utilisateur qui a répondu, le panneau 8 demande à cet utilisateur d'approcher sa clé de la tête 156 de lecture. Par exemple, ici, il est supposé qu'il s'agit de la clé 14. Le module 170 acquiert alors l'identifiant 24 par l'intermédiaire de la tête 156.

Lors d'une étape 358, le module 170 vérifie que l'identifiant de clé acquis satisfait aux conditions de participation enregistrées dans la base 172. Par exemple, ces conditions de participation comportent une liste d'identifiants de clés autorisées à participer à ce sondage. Si l'identifiant de clé acquis appartient à cette liste, alors l'utilisateur identifié par cet identifiant de clé est autorisé à participer à ce sondage. Dans le cas contraire, sa participation est interdite.

Si le module 170 détermine que la participation de l'utilisateur identifié par son identifiant de clé est interdite, alors, lors d'une étape 360, un message est affiché sur l'écran 150 pour lui indiquer qu'il n'est pas autorisé à participer et sa réponse n'est pas enregistrée dans la base 172.

À l'inverse, si le module 170 détermine que la participation de cet utilisateur est autorisée, alors, lors d'une étape 362, le module 170 vérifie que, dans la base 172, cet identifiant de clé acquis n'est pas déjà enregistré en association avec la même question.

Dans l'affirmative, lors d'une étape 364, le module 170 enregistre dans la base de données 172 :
- la réponse sélectionnée en association avec la question,
- l'identifiant de clé acquis en association avec la réponse enregistrée, et
- la date à laquelle cette réponse est enregistrée dans la base de données 172.

Si l'identifiant de clé acquis est déjà enregistré dans la base 172 en association avec cette question alors, lors d'une étape 366, le module 170 remplace l'ancienne réponse associée à la même question et au même identifiant de clé par la nouvelle réponse acquise. Ainsi, dans ce mode de réalisation, un utilisateur peut modifier sa réponse, par exemple, tant que la date à laquelle le sondage se termine n'a pas encore expiré.

En parallèle, à tout moment, lors d'une étape 370, l'administrateur peut consulter les résultats du sondage. Pour cela, il se connecte au serveur 60 à l'aide de son poste 80 et déclenche l'exécution du module 70. Le module 70 se connecte au panneau 8 par l'intermédiaire des liaisons 50 et 30 et rapatrie les résultats du sondage enregistré dans la base 172 vers la base 72 de données.

À partir de ce moment-là, lors d'une étape 372, l'administrateur peut consulter et traiter les résultats du sondage.

### Chapitre II : Variantes

### Variantes du panneau d'affichage :

D'autres modes de réalisation de l'interface homme-machine 152 sont possibles. Par exemple, l'interface 152 peut comporter en plus ou à la place des touches, un module de reconnaissance vocal. L'interface 152 peut comporter un nombre de touches plus ou moins important. Par exemple, l'interface 152 comporte une touche pour chaque lettre de l'alphabet. L'interface 152 peut aussi être intégrée dans l'écran 150. Dans ce dernier cas, l'écran 150 est un écran tactile.

En variante, la liaison 30 est remplacée par une liaison sans-fil courte distance telle qu'une liaison sans-fil conforme à la norme Bluetooth et, plus précisément, à la norme BLE (« Bluetooth Low Energy »). Dans ce cas, les interfaces filaires 122 et 154 sont remplacées par des émetteurs-récepteurs sans fil courte distance.

Dans un autre mode de réalisation, le panneau 8 comporte son propre émetteur-récepteur longue distance. Le panneau 8 est alors capable d'établir la liaison longue distance 50 sans passer pour cela par l'intermédiaire de l'émetteur-récepteur 124 de la centrale 12. Dans ce dernier cas, l'interface filaire 154 peut être omise.

Le panneau 8 n'est pas nécessairement fixé sur un mur des parties communes. Il peut aussi être fixé sur un support, mécaniquement indépendant des murs des parties communes, situé à l'intérieur des parties communes.

En variante, l'ensemble peut comporter plusieurs panneaux d'affichage tel que le panneau 8. Ces panneaux d'affichage sont, par exemple, répartis dans différents emplacements à l'intérieur de différentes parties communes d'un même bâtiment ou à l'intérieur de partie commune de différents bâtiments dont les accès sont contrôlés par le système 2 de contrôle d'accès.

En variante, le module 170 de commande du panneau 8 est déporté dans la centrale 12 ou dans un serveur distant tel que le serveur 60.

### Variantes de la centrale d'accès :

En variante, la centrale 12 remplit également les fonctions d'un portier électrique. Dans ce cas, la centrale 12 comporte une interface homme-machine. Cette interface homme-machine permet à un visiteur, présent devant la centrale 12, d'appeler un résidant du bâtiment puis de communiquer avec ce résidant par l'intermédiaire de cette interface. En réponse, le résident peut déclencher la génération et la transmission de la commande d'ouverture à la serrure 10 en enfonçant un bouton de son combiné. À cet effet, typiquement, l'interface homme-machine de la centrale 12 comporte alors les éléments suivants : un microphone, un haut-parleur, un ou plusieurs boutons d'appel pour déclencher l'appel d'un résident. Éventuellement, cette interface homme-machine comporte aussi une caméra pour filmer le visiteur.

D'autres émetteurs-récepteurs courtes distances peuvent être utilisés à la place ou en plus de ceux précédemment décrits. Tout émetteur-récepteur apte à établir un réseau personnel sans fil peut être utilisé. Ces réseaux personnels sont plus connus sous l'acronyme WPAN ("Wireless Personal Area Network").

D'autres modes de réalisations des têtes de lecture sont possibles. Par exemple, la tête de lecture peut être choisie dans le groupe constitué d'un lecteur d'étiquettes RFID ("Radio Frequency IDentification"), d'un émetteur-récepteur conforme à la norme Bluetooth, d'un émetteur-récepteur en champ proche, d'un émetteur-récepteur conforme à la norme Zigbee. Un émetteur-récepteur en champ proche est un émetteur-récepteur utilisant une communication en champ proche plus connue sous l'acronyme NFC ("Near Field Communication").

En variante, la centrale 12 d'accès comporte plusieurs têtes de lecture disposée chacune à proximité d'une porte d'accès respective.

D'autres modes de réalisation de l'émetteur-récepteur 124 sont possibles. Tout émetteur-récepteur apte à établir un réseau étendu sans fil peut être utilisé. Ces réseaux étendus sans fil sont plus connus sous le terme de réseau cellulaire ou sous l'acronyme WWAN ("Wireless Wide Area Network").

### Variantes du procédé :

D'autres paramètres supplémentaires pour organiser le sondage peuvent être mis en œuvre. Par exemple, l'affichage des résultats du sondage en cours sur l'écran 150 peut être autorisé et, en alternance, interdit à l'aide d'un paramètre supplémentaire.

Un sondage peut comporter plusieurs questions. Dans ce cas, tout ce qui a été décrit ici dans le cas d'une seule question s'applique à chacune des questions. Un sondage peut aussi se présenter sous la forme d'un vote. Un sondage peut également être utilisé pour identifier les utilisateurs qui souhaitent participer à un même événement tel qu'un spectacle. Dans ce cas, le message affiché sur l'écran peut être "Merci de passer votre clé devant la tête de lecture si vous souhaitez réserver une place pour ce spectacle". Dans ce dernier cas, le module 170 peut arrêter d'enregistrer les réponses dès que le nombre de réponses déjà enregistrées dépasse un seuil prédéterminé.

Typiquement, en plus d'une question ou d'un message, l'afficheur permet de consulter un document préalablement téléchargé dans la mémoire 160 du panneau 8. L'utilisateur a alors la possibilité de consulter ce document sur l'écran 150 par exemple, avant de sélectionner sa réponse.

Une autre utilisation possible du panneau 8 est l'affichage d'informations collectées par la tête de lecture 156. Par exemple, il est demandé au technicien de ménage de passer sa clé devant la tête 156 lorsqu'il arrive pour faire le ménage et lorsqu'il a terminé. Dans ce cas, le module 170 affiche sur l'écran 150 l'heure d'arrivé et l'heure de départ du technicien de ménage.

Les étapes 358 et 360 peuvent être omises. Dans ce cas, tout porteur d'une clé peut participer au sondage sans aucune restriction.

D'autres modes de réalisation de l'étape 358 sont possibles. Par exemple, la participation au sondage est interdite si l'identifiant de clé acquis appartient à une liste pré-enregistrée dans la mémoire 160.

L'ordre de certaines étapes peut être modifié. Par exemple, l'étape 356 d'acquisition de l'identifiant de clé à l'aide de la tête 156 peut être réalisée avant l'acquisition de la réponse du résident.

En variante, l'étape 366 est omise. Dans ce cas, un résident ne peut pas modifier sa réponse à une question.

L'étape 362 peut aussi être omise. Dans ce cas, plusieurs réponses associées à un même identifiant de clé et à la même question peuvent être enregistrées dans la base 172.

Dans un mode de réalisation simplifié, seul la réponse et l'identifiant de clé sont enregistrés dans la base 172. La date de la réponse n'est pas enregistrée.

### Autres variantes :

Dans cette demande, les mémoires des clés électroniques, de la centrale 12 et du serveur 60 ont été représentées sous la forme d'un seul bloc de mémoire pour simplifier la description. Toutefois, en pratique, ces mémoires peuvent être chacune composées de plusieurs blocs de mémoires distincts.

La porte 6 n'est pas nécessairement une porte d'entrée d'un bâtiment. Il peut aussi s'agir d'une porte d'accès à un local situé à l'intérieur du bâtiment comme, par exemple, un garage ou un local à ordures.

### Chapitre III : Avantages des modes de réalisation décrits

Le fait d'utiliser la même clé que celle utilisée pour commander le déverrouillage de la porte d'accès simplifie le mécanisme d'identification du panneau 8 d'affichage. En effet, les résidents du bâtiment sont nécessairement chacun équipés d'une telle clé. Ainsi, il n'est pas nécessaire d'équiper chaque utilisateur du panneau 8 avec une clé ou un badge supplémentaire qui permet de l'identifier lorsqu'un sondage est organisé par l'intermédiaire de ce panneau 8. De plus, les clés du système 2 de contrôle d'accès remplissent alors deux fonctions distinctes, à savoir la fonction de déverrouillage de la porte d'accès au bâtiment et la fonction de jeton d'identification permettant d'identifier la réponse d'un utilisateur.

Le fait d'utiliser un émetteur-récepteur longue distance commun au module 136 de contrôle d'accès et au module 170 de commande du panneau 8 permet de simplifier encore plus la mise en œuvre du mécanisme d'identification du panneau d'affichage.

Le fait d'associer à la réponse de l'utilisateur, son identifiant permet d'empêcher qu'un utilisateur réponde plusieurs fois à la même question. Cela permet aussi de retrouver la réponse d'un utilisateur particulier pour lui permettre de la modifier ultérieurement.

L'identification de l'utilisateur qui a répondu permet aussi d'interdire à certains utilisateurs de répondre au sondage en cours.

## Revendications

1. Ensemble comportant un panneau électronique (8) d'affichage, situé dans les parties communes d'un bâtiment, ce panneau électronique d'affichage comportant :
- un écran (150) apte à afficher une question,
- une interface homme-machine (152) permettant d'acquérir la réponse d'un utilisateur à la question affichée,
- un module (170) de commande du panneau électronique d'affichage comportant une mémoire contenant la question à afficher, ce module de commande étant apte à provoquer l'affichage sur l'écran de la question enregistrée dans la mémoire et à enregistrer, dans cette mémoire, la réponse acquise par l'intermédiaire de l'interface homme-machine en association avec la question affichée, l'ensemble comporte également :
- une serrure électrique (10) déplaçable, en réponse à la réception d'une commande d'ouverture :
- depuis une position verrouillée dans laquelle elle maintient une porte d'accès au bâtiment dans une position fermée,
- vers une position déverrouillée dans laquelle la porte d'accès peut être librement déplacée vers une position ouverte,
- une clé électronique (14) comportant une mémoire non-volatile (22) dans laquelle est enregistré un identifiant unique de cette clé électronique,
- une centrale d'accès (12) comportant :
- un module (136) de contrôle d'accès comportant une mémoire (132) contenant des droits d'accès pré-enregistrés, ce module de contrôle d'accès étant apte à déterminer à partir d'un identifiant de clé reçu et des droits d'accès pré-enregistrés dans sa mémoire, si cette clé est autorisée ou non à accéder au bâtiment et, dans l'affirmative, à générer et à transmettre la commande d'ouverture à la serrure électrique, et dans la négative, à inhiber la génération de la commande d'ouverture,
- une première tête (120) de lecture solidaire du bâtiment et située à l'extérieur du bâtiment à proximité de la porte d'accès, cette première tête de lecture étant apte à acquérir l'identifiant enregistré dans la mémoire non-volatile de la clé électronique lorsque cette clé électronique est présentée à proximité de cette première tête de lecture et à transmettre cette identifiant de clé au module de contrôle d'accès,
dans lequel :
- le panneau électronique d'affichage comporte une seconde tête (156) de lecture de clés apte à acquérir l'identifiant enregistré dans la mémoire non-volatile de la même clé électronique lorsque cette clé électronique est présentée à proximité de cette seconde tête de lecture, et
- le module (170) de commande du panneau électronique d'affichage est configuré pour acquérir l'identifiant de clé lu par la seconde tête de lecture et, en réponse à l'acquisition de la réponse, pour enregistrer en plus l'identifiant de clé acquis en association avec la réponse acquise dans la mémoire du panneau électronique d'affichage.

2. Ensemble selon la revendication 1, dans lequel l'ensemble comporte :
- un serveur (60) de droits d'accès permettant à un administrateur de gérer les droits d'accès enregistrés dans la mémoire du module (136) de contrôle d'accès et de consulter les réponses enregistrées dans la mémoire du module (170) de commande du panneau électronique d'affichage, et
- un émetteur-récepteur longue distance (124) apte à établir une liaison (50) longue distance sans-fil pour raccorder le module (170) de commande du panneau électronique d'affichage et le module (136) de contrôle d'accès au serveur de droits d'accès par l'intermédiaire d'un réseau public (62) à commutation de paquets, cet émetteur-récepteur longue distance étant commun à ces deux modules.

3. Ensemble selon l'une quelconque des revendications précédentes, dans lequel le module (170) de commande du panneau électronique d'affichage est configuré pour, en réponse à l'acquisition de la réponse, comparer l'identifiant de clé acquis par la seconde tête (156) de lecture aux identifiants de clés déjà enregistrés dans la mémoire en association avec la même question et lorsque l'identifiant de clé acquis est déjà enregistré dans la mémoire en association avec la même question, à interdire l'enregistrement dans cette mémoire d'une réponse supplémentaire à cette même question.

4. Ensemble selon l'une quelconque des revendications 1 à 2, dans lequel le module (170) de commande du panneau électronique d'affichage est configuré pour, en réponse à l'acquisition de la réponse, comparer l'identifiant de clé acquis par la seconde tête (156) de lecture aux identifiants de clés déjà enregistrés dans la mémoire en association avec la même question et lorsque l'identifiant de clé acquis est déjà enregistré dans la mémoire (160) en association avec la même question, le module (170) de commande du panneau électronique d'affichage est configuré pour remplacer l'ancienne réponse associée avec cet identifiant de clé dans la mémoire par la dernière réponse acquise.

5. Ensemble selon l'une quelconque des revendications précédentes, dans lequel la mémoire (160) comporte une liste d'identifiants de clés et le module (170) de commande du panneau électronique d'affichage est configuré pour, en réponse à l'acquisition de la réponse, comparer l'identifiant de clé acquis par la seconde tête de lecture aux identifiants de clés contenus dans cette liste et pour interdire l'enregistrement de la réponse dans la mémoire lorsque l'identifiant de clé acquis n'appartient pas à cette liste ou, au contraire, appartient à cette liste.

6. Ensemble selon l'une quelconque des revendications précédentes, dans lequel le module (170) de commande comporte une horloge est, à chaque fois qu'un identifiant de clé est enregistré en association avec une réponse, la date et l'heure à laquelle la réponse a été acquise est également enregistrée, dans la mémoire, en association avec cette réponse.

7. Ensemble selon l'une quelconque des revendications précédentes, dans lequel chaque tête (120, 156) de lecture est apte :
- à établir une liaison (18) courte distance sans-fil de transmission d'informations avec la clé électronique uniquement sur une distance inférieure à 10 mètres, et
- à recevoir l'identifiant de cette clé électronique par l'intermédiaire de cette liaison courte distance puis à le transmettre au module (136) de contrôle d'accès lorsque la tête de lecture est la première tête (120) de lecture ou au module de commande du panneau électronique d'affichage lorsque la tête de lecture est la seconde tête (156) de lecture.

8. Ensemble selon la revendication 7, dans lequel chaque tête de lecture est apte à lire une étiquette RFID ("Radio Frequency IDentification").

## Patentansprüche

1. Anordnung mit einer elektronischen Anzeigetafel (8), die in den Gemeinschaftsbereichen eines Gebäudes angeordnet ist, wobei die elektronische Anzeigetafel umfasst:
- einen Bildschirm (150) zur Anzeige einer Frage,
- eine Mensch-Maschine-Schnittstelle (152) zum Erfassen der Antwort eines Benutzers auf die angezeigte Frage,
- ein Steuermodul (170) für die elektronische Anzeigetafel mit einem Speicher, der die anzuzeigende Frage enthält, wobei dieses Steuermodul die im Speicher gespeicherte Frage auf dem Bildschirm anzeigen und die über die Mensch-Maschine-Schnittstelle in Verbindung mit der angezeigten Frage erhaltene Antwort in diesem Speicher speichern kann,
Die Vorrichtung umfasst außerdem:
- ein elektrisches Schloss (10), das auf Empfang eines Öffnungsbefehls hin bewegbar ist:
- aus einer verriegelten Position, in der es eine Zugangstür zum Gebäude in einer geschlossenen Position hält,
- in eine entriegelte Position, in der die Zugangstür frei in eine geöffnete Position bewegt werden kann,
- einen elektronischen Schlüssel (14) mit einem nichtflüchtigen Speicher (22), in dem eine eindeutige Kennung dieses elektronischen Schlüssels gespeichert ist,
- eine Zugangszentrale (12) mit:
- ein Zugangskontrollmodul (136) mit einem Speicher (132), der vorab gespeicherte Zugangsrechte enthält, wobei dieses Zugangskontrollmodul anhand einer empfangenen Schlüsselkennung und der in seinem Speicher vorab gespeicherten Zugangsrechte feststellen kann, ob dieser Schlüssel zum Zugang zum Gebäude berechtigt ist oder nicht, und im Falle einer Berechtigung den Öffnungsbefehl an das elektrische Schloss generieren und übertragen kann und im Falle einer Unberechtigung die Generierung des Öffnungsbefehls sperren kann,
- einen ersten Lesekopf (120), der fest mit dem Gebäude verbunden ist und sich außerhalb des Gebäudes in der Nähe der Zugangstür befindet, wobei dieser erste Lesekopf in der Lage ist, die in dem nichtflüchtigen Speicher des elektronischen Schlüssels gespeicherte Kennung zu erfassen, wenn dieser elektronische Schlüssel in die Nähe dieses ersten Lesekopfs gebracht wird, und diese Schlüsselkennung an das Zugangskontrollmodul zu übertragen,
wobei:
- die elektronische Anzeigetafel einen zweiten Lesekopf (156) für Schlüssel ( ) aufweist, der die in dem nichtflüchtigen Speicher desselben elektronischen Schlüssels gespeicherte Kennung erfassen kann, wenn dieser elektronische Schlüssel in die Nähe dieses zweiten Lesekopfs (156) gebracht wird, und
- das Steuermodul (170) der elektronischen Anzeigetafel so konfiguriert ist, dass es die vom zweiten Lesekopf gelesene Schlüsselkennung erfasst und als Reaktion auf die Erfassung der Antwort zusätzlich die erfasste Schlüsselkennung in Verbindung mit der erfassten Antwort im Speicher der elektronischen Anzeigetafel speichert.

2. Anordnung gemäß Anspruch 1, wobei die Anordnung umfasst:
- einen Zugriffsrechteserver (60), der es einem Administrator ermöglicht, die im Speicher des Zugangskontrollmoduls (136) gespeicherten Zugriffsrechte zu verwalten und die im Speicher des Steuermoduls (170) der elektronischen Anzeigetafel gespeicherten Antworten abzurufen, und
- einen Fernsender/-empfänger (124), der eine drahtlose Fernverbindung (50) herstellen kann, um das Steuermodul (170) der elektronischen Anzeigetafel und das Zugriffskontrollmodul (136) über ein öffentliches paketvermitteltes Netzwerk (62) mit dem Zugriffsrechteserver zu verbinden, wobei der Fernsender/-empfänger beiden Modulen gemeinsam ist.

3. Anordnung nach einem der vorstehenden Ansprüche, wobei das Steuerungsmodul (170) der elektronischen Anzeigetafel so konfiguriert ist, dass es als Reaktion auf den Erhalt der Antwort die vom zweiten Lesekopf (156) erfasste Schlüsselkennung mit den bereits im Speicher in Verbindung mit derselben Frage gespeicherten Schlüsselkennungen vergleicht und, wenn die erfasste Schlüsselkennung bereits im Speicher in Verbindung mit derselben Frage gespeichert ist, die erfasste Schlüsselkennung an den ersten Empfänger (132) sendet. (156) mit den bereits im Speicher in Verbindung mit derselben Frage gespeicherten Schlüsselkennungen zu vergleichen und, wenn die erfasste Schlüsselkennung bereits im Speicher in Verbindung mit derselben Frage gespeichert ist, die Speicherung einer weiteren Antwort auf dieselbe Frage in diesem Speicher zu verhindern.

4. Anordnung nach einem der Ansprüche 1 bis 2, wobei das Steuermodul (170) der elektronischen Anzeigetafel so konfiguriert ist, dass es als Reaktion auf den Erhalt der Antwort die vom zweiten Lesekopf (156) erfasste Schlüsselkennung mit den bereits im Speicher in Verbindung mit derselben Frage gespeicherten Schlüsselkennungen vergleicht und, wenn die erfasste Schlüsselkennung bereits im Speicher in Verbindung mit derselben Frage gespeichert ist, die Speicherung einer weiteren Antwort auf dieselbe Frage in diesem Speicher verhindert. (156) mit den bereits im Speicher in Verbindung mit derselben Frage gespeicherten Schlüsselkennungen zu vergleichen, und wenn die erfasste Schlüsselkennung bereits im Speicher (160) in Verbindung mit derselben Frage gespeichert ist, ist das Steuermodul (170) der elektronischen Anzeigetafel so konfiguriert, dass es die alte Antwort, die mit dieser Schlüsselkennung im Speicher verknüpft ist, durch die zuletzt erfasste Antwort ersetzt.

5. Anordnung nach einem der vorstehenden Ansprüche, wobei der Speicher (160) eine Liste von Schlüsselkennungen enthält und die (170) der elektronischen Anzeigetafel so konfiguriert ist, dass es als Reaktion auf die Erfassung der Antwort die vom zweiten Lesekopf erfasste Schlüsselkennung mit den in dieser Liste enthaltenen Schlüsselkennungen vergleicht und die Speicherung der Antwort im Speicher verhindert, wenn die erfasste Schlüsselkennung nicht zu dieser Liste gehört oder, im Gegenteil, zu dieser Liste gehört.

6. Vorrichtung nach einem der vorstehenden Ansprüche, wobei das Steuermodul (170) einen Taktgeber umfasst, der jedes Mal, wenn eine Schlüsselkennung in Verbindung mit einer Antwort gespeichert wird, auch das Datum und die Uhrzeit, zu denen die Antwort erfasst wurde, in Verbindung mit dieser Antwort im Speicher speichert.

7. Vorrichtung nach einem der vorstehenden Ansprüche, wobei jeder Lesekopf (120, 156) dazu ausgelegt ist:
- eine drahtlose Kurzstreckenverbindung (18) zur Übertragung von Informationen mit dem elektronischen Schlüssel nur über eine Entfernung von weniger als 10 Metern herzustellen und
- die Kennung dieses elektronischen Schlüssels über diese Kurzstreckenverbindung zu empfangen und sie dann an das Zugangskontrollmodul (136) zu übertragen, wenn der Lesekopf der erste Lesekopf (120) ist, oder an das Steuermodul der elektronischen Anzeigetafel, wenn der Lesekopf der zweite Lesekopf (156) ist.

8. Anordnung nach Anspruch 7, wobei jeder Lesekopf ein RFID-Etikett ("Radio Frequency IDentification") lesen kann.

## Claims

1. An assembly comprising an electronic display panel (8) located in the common areas of a building, said electronic display panel comprising:
- a screen (150) capable of displaying a question,
- a human-machine interface (152) for acquiring a user's response to the question displayed,
- a control module (170) for the electronic display panel comprising a memory containing the question to be displayed, this control module being capable of causing the question stored in the memory to be displayed on the screen and of storing, in this memory, the response acquired via the human-machine interface in association with the question displayed,
the assembly also comprises:
- an electric lock (10) movable, in response to receiving an opening command:
- from a locked position in which it keeps an access door to the building in a closed position,
- to an unlocked position in which the access door can be freely moved to an open position,
- an electronic key (14) comprising a non-volatile memory (22) in which a unique identifier for this electronic key is stored,
- an access control unit (12) comprising:
- an access control module (136) comprising a memory (132) containing pre-recorded access rights, this access control module being able to determine, from a key identifier received and the access rights pre-recorded in its memory, whether or not this key is authorised to access the building and, if so, to generate and transmit the opening command to the electric lock, and if not, to inhibit the generation of the opening command,
- a first reader head (120) fixed to the building and located outside the building near the access door, this first reader head being capable of acquiring the identifier stored in the non-volatile memory of the electronic key when this electronic key is presented near this first reader head and of transmitting this key identifier to the access control module,
wherein:
- the electronic display panel comprises a second key reading head (156) capable of acquiring the identifier stored in the non-volatile memory of the same electronic key when this electronic key is presented in the vicinity of this second reading head ( , and
- the electronic display panel control module (170) is configured to acquire the key identifier read by the second reader head and, in response to acquiring the response, to additionally store the acquired key identifier in association with the acquired response in the memory of the electronic display panel.

2. The assembly according to claim 1, wherein the assembly comprises:
- an access rights server (60) allowing an administrator to manage the access rights stored in the memory of the access control module (136) and to consult the responses stored in the memory of the electronic display panel control module (170), and
- a long-distance transceiver (124) capable of establishing a long-distance wireless link (50) to connect the electronic display panel control module (170) and the access control module (136) to the access rights server via a public packet-switched network (62), said long-distance transceiver being common to both modules.

3. An assembly according to any of the preceding claims, wherein the electronic display panel control module (170) is configured to, in response to acquiring the response, compare the key identifier acquired by the second read head (156) with the key identifiers already stored in the memory in association with the same question and, when the acquired key identifier is already stored in the memory in association with the same question, to prohibit the storage in this memory of an additional response to this same question.

4. An assembly according to any of claims 1 to 2, wherein the electronic display panel control module (170) is configured to, in response to acquiring the response, compare the key identifier acquired by the second read head (156) with the key identifiers already stored in the memory in association with the same question, and when the acquired key identifier is already stored in the memory (160) in association with the same question, the electronic display panel control module (170) is configured to replace the old answer associated with that key identifier in the memory with the last acquired answer.

5. An assembly according to any of the preceding claims, wherein the memory (160) includes a list of key identifiers and the (170) is configured to, in response to acquisition of the response, compare the key identifier acquired by the second read head with the key identifiers contained in this list and to prohibit recording of the response in the memory when the acquired key identifier does not belong to this list or, conversely, belongs to this list.

6. The assembly according to any of the preceding claims, wherein the control module (170) includes a clock and, each time a key identifier is recorded in association with a response, the date and time at which the response was acquired is also recorded in the memory in association with that response.

7. According to any of the preceding claims, wherein each read head (120, 156) is capable of:
- establish a short-range wireless information transmission link (18) with the electronic key only over a distance of less than 10 metres, and
- receive the identifier of this electronic key via this short-range link and then transmit it to the access control module (136) when the reading head is the first reading head (120) or to the control module of the electronic display panel when the reading head is the second reading head (156).

8. Assembly according to claim 7, wherein each read head is capable of reading an RFID ("Radio Frequency IDentification") tag.
